# EUROPEAN PATENT APPLICATION

(11) **EP 4 537 955 A1**
(43) Date of publication of application: **16.04.2025**
(21) Application number: 23818884.1
(22) Date of filing: 11.05.2023
(51) Int. Cl.: B22D 17/22, B22D 17/20, C22C 45/10, C25D 7/00, B23P 15/00, D04B 35/02

(54) **NEEDLE FOR WARP KNITTING MACHINE AND METHOD FOR MANUFACTURING NEEDLE BY MEANS OF AMORPHOUS ALLOY INJECTION MOLDING PROCESS**

(30) Priority: 11.06.2022 CN 202210656317
(71) Applicant: Anhui Haofang Electromechanics Co., Ltd, Bengbu, Anhui 233000 (CN)
(72) Inventor: DU, Chaohui, Bengbu, Anhui 233000 (CN); YANG, Yong, Bengbu, Anhui 233000 (CN); CHE, Junjun, Bengbu, Anhui 233000 (CN)
(74) Representative: Balder IP Law, S.L.
(86) International application number: PCT/CN2023/093523
(87) International publication number: WO 2023/236719

(57) **Abstract**

A needle for a warp knitting machine, manufactured by means of an amorphous alloy injection molding process and comprising the following components: in parts by weight, 57.5-65.5 parts of zirconium, 11-16 parts of copper, 7-13 parts of nickel, 5-10 parts of titanium, 1-7 parts of aluminum, 1-7 parts of beryllium and 0.3-2 parts of yttrium. A method for manufacturing a needle for a warp knitting machine by means of an amorphous alloy injection molding process, comprising the following steps: (1) material mixing and smelting for manufacture into small blocks; (2) injection molding; (3) alloy opening removal; (4) thickness machining; (5) slotting; (6) polishing; and (7) electroplating. Beryllium and yttrium are added into amorphous alloy zirconium-based metal; beryllium can improve the toughness of a latch needle product, and has high fatigue limit and high wear resistance; yttrium powder can improve the strength, toughness and wear resistance of a latch needle blank.

## Description

### FIELD

The present application relates to the technical field of amorphous alloy injection molding process, and in particular to a needle for a warp knitting machine and a method for manufacturing the needle by an amorphous alloy injection molding process.

### BACKGROUND

Needles for a warp knitting machine are one of the most largely consumed components of the warp knitting machine, with a huge domestic market. The current manufacturing process of the needle for warp knitting is as follows: stamping and blanking of the entire steel plate, bending at the head in the needle hook position, roughening of the shape and the hook groove, heat treatment, finishing of the shape and hook groove, polishing, and plating. The manufacturing cost is high and the efficiency is low, and the bending and molding of the needle head has a great impact on its strength, which directly affects the service life of the needle. There is an urgent need for a processing technology that can not only meet product requirements, but also improve production efficiency, while reducing costs and enhancing the strength of the needle head use area.

### SUMMARY

**In** order to solve the technical problems of high preparation cost, poor fatigue resistance and short service life of existing needles for the warp knitting machine, the present application provides a needle for a warp knitting machine and a method for manufacturing the needle by an amorphous alloy injection molding process.

The technical solutions adopted by the present application include: a needle for a warp knitting machine, wherein it is manufactured by an amorphous alloy injection molding process and comprises, in parts by weight, 57.5-65.5 parts of zirconium, 11-16 parts of copper, 7-13 parts of nickel, 5-10 parts of titanium, 1-7 parts of aluminum, 1-7 parts of beryllium, and 0.3-2 parts of yttrium.

The present application is also specifically characterized by a needle for a warp knitting machine, wherein it is manufactured by an amorphous alloy injection molding process and comprises, in parts by weight, 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder.

A method for manufacturing a needle for a warp knitting machine by an amorphous alloy injection molding process is provided, comprising the steps of: (1) mixing; (2) injection molding; (3) sprue removal; (4) thickness processing; (5) slotting; (6) polishing; and (7) electroplating.

A method for manufacturing a needle for a warp knitting machine by an amorphous alloy injection molding process is provided, comprising the following steps:
(1) Mixing and smelting raw materials into small pieces. The step comprises weighing, in parts by mass, 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder; adding the materials into a smelting furnace and heating to 1000-1200°C; vacuumizing with argon gas protection to isolate oxygen in order to prevent oxidation of the raw materials in the smelting furnace; injecting the melted raw materials as a liquid state into a die cavity special for making feed, with the die provided with cooling circulation water for the rapid cooling of the feed as a melted liquid state into a solid block; and taking out and cracking the solid block into small pieces of raw materials of less than 20 mm.
(2) Injection molding. The step comprises adding the small pieces of raw materials of less than 20 mm into a storage bin of an injection device; vacuumizing until below 500 Pa; heating the raw materials to above 700°C by high-frequency heating in this vacuum or argon protection state; automatically pouring the completely melted raw materials into an injection chamber; and injecting the melt into a die at a high speed greater than 0.5 m/s and a high pressure to obtain a needle injection blank for the warp knitting machine connected to a material rod; wherein the die temperature is preferably 180-220°C.
(3) Sprue removal. The step comprises placing the needle injection blank for the warp knitting machine connected to the material rod into a positioning tool for laser cutting, wherein the positioning tool is mounted on a workbench of a laser cutting machine; pressing a start button to automatically start a set program, allowing the laser cutting machine to emit laser light to cut the material rod on the needle for the warp knitting machine, leaving a margin of 0.05 mm from the cutting position to the needle for the next processing, to obtain a needle blank for the warp knitting machine; fixing the needle blank for the warp knitting machine neatly in batches on a positioning tool special for a grinder; and grinding the fixed needle blank for the warp knitting machine to remove the excess of the sprue, with a Z-axis feed amount of preferably 0.01 mm each time, until the sprue is level with the edge of the product.
(4) Thickness processing. The step comprises placing the sprue-removed needle blank for the warp knitting machine on the grinder; and grinding two large surfaces of the needle blank for the warp knitting machine to a certain thickness.
(5) Slotting. The step comprises placing a positioning tool for slotting on a platform of a scribing machine; placing the thickness-processed needle blank for the warp knitting machine in the positioning tool for slotting; starting the scribing machine, allowing a blade on the scribing machine to rotate rapidly and the head part loaded with the blade to move according to a predetermined trajectory; and whitting the needle blank with the blade according to the movement trajectory to obtain a slotted needle blank.
(6) Polishing. The step comprises placing the slotted needle blank into a polishing jig; holding the polishing jig close to a polishing wheel; and polishing the slotted needle blank to obtain a polished needle blank.
(7) Electroplating. The step comprises cleaning the polished needle blank; placing the well cleaned needle blank on an electroplating jig; heating in a furnace for surface treatment; and taking the product out of the furnace after a certain period of time; wherein a layer of coating is formed on the surface of the product, with a greatly improved wear resistance of the product.

The present application has the following beneficial effects: (1) The present application adopts an amorphous alloy process to prepare a needle, with high raw material utilization rate and greatly reduced production costs. The prepared needle blank has excellent fatigue resistance, toughness and strength, and its service life is more than twice that of existing products. The amorphous alloy zirconium-based metal is usually zirconium, copper, nickel, or titanium. The performance of such amorphous alloy cannot meet the performance requirements of the needle products for warp knitting. Based on this, beryllium and yttrium are added in the present application. Beryllium is able to improve the toughness of the needle product and qualify the product for high fatigue limit and high wear resistance. Yttrium powder is able to improve the strength, toughness and wear resistance of the needle blank. Through countless experiments, comprehensive consideration of performance and cost, and scientific selection of the proportion of components, the present application prepares and obtains a needle blank with high toughness and high wear resistance by a metallurgical process using amorphous alloy. The performance requirements are in full compliance with the needle hook fracture angle test data, needle core fracture angle test data, fracture strength test data, and tensile strength test data in the National Textile Industry Standard FZ/T97018-1999. (2) The production process is simple, which greatly reduces the manpower and labor intensity and is convenient for automation and large-scale production.

### BRIEF DESCRIPTION OF DRAWINGS

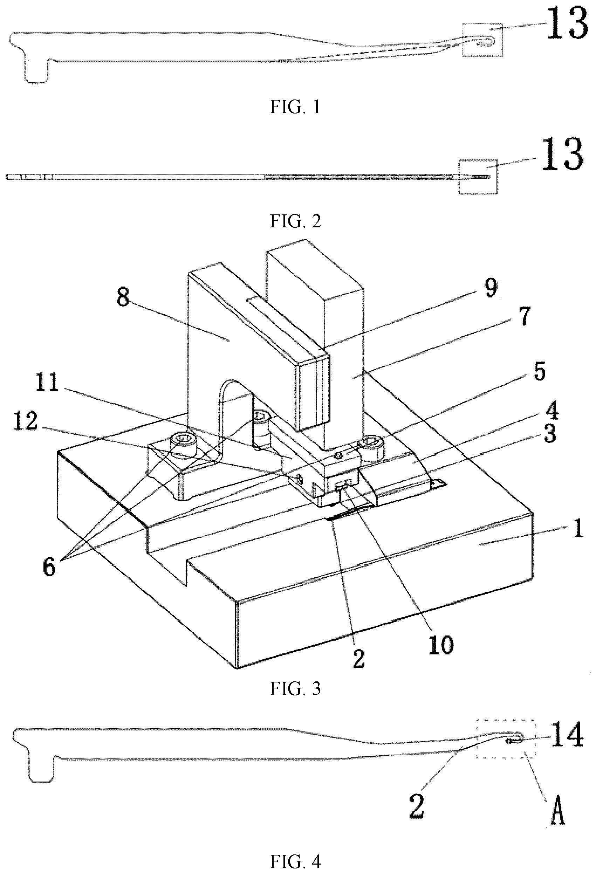

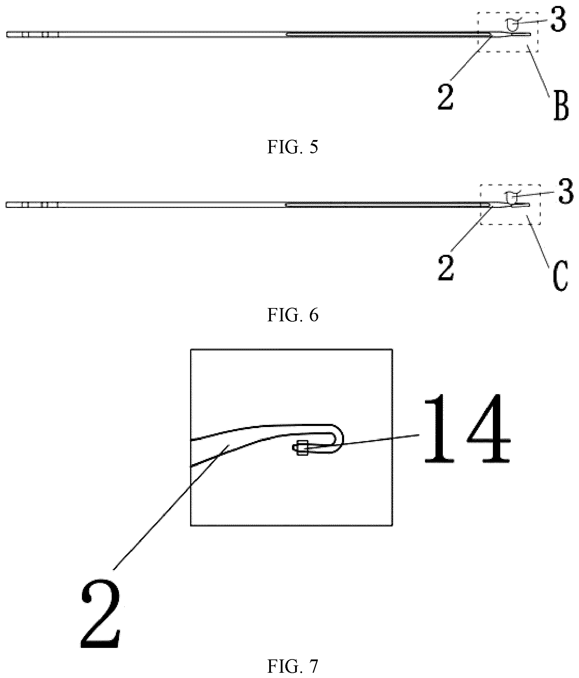

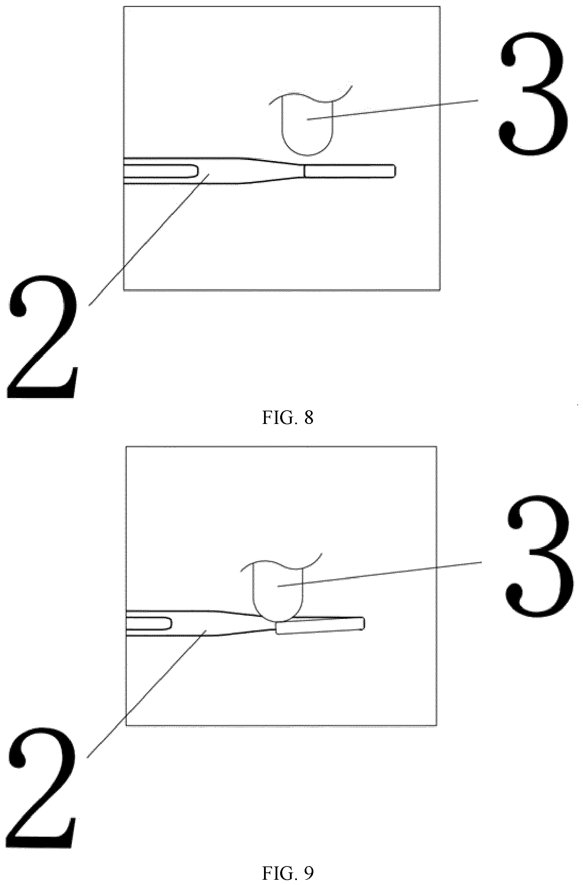

FIG. 1 is a schematic view of wear-prone and breakage-prone areas of a needle for a warp knitting machine during operation. FIG. 2 is a top view of FIG. 1. FIG. 3 is a schematic view of a tool structure for elasticity test. FIG. 4 is a schematic view of a force point of the needle for the warp knitting machine in the elasticity test. FIG. 5 is a schematic view of the needle for warp knitting in the state where an iron block of the elasticity testing tool is not pressed down. FIG. 6 is a schematic view of the needle for warp knitting in the state where the iron block of the elasticity testing tool is pressed down. FIG. 7 is an enlarged view of part A in FIG. 4. FIG. 8 is an enlarged view of part B in FIG. 5. FIG. 9 is an enlarged view of part C in FIG. 6.

Reference numerals in the drawings are as follows: 1: base plate; 2: needle for warp knitting machine; 3: iron block; 4: pressing block; 5: connecting rod; 6: screw; 7: cylinder; 8: bracket; 9: insulating block; 10: screw; 11: fixing block; 12: pin; 13: fracture-prone area; 14: force point.

### DETAILED DESCRIPTION

Example 1: A needle for a warp knitting machine, wherein it is manufactured by an amorphous alloy injection molding process and comprises, in parts by weight, 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder. A method for manufacturing the needle for the warp knitting machine by an amorphous alloy injection molding process comprises the following steps:
(1) Mixing and smelting raw materials into small pieces. The raw materials were weighed according to, in parts by mass, 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder. The materials were added into a smelting furnace and heated to 1000-1200°C. In order to prevent oxidation of the raw materials in the smelting furnace, vacuumization was carried out with argon gas protection to isolate oxygen. After the raw materials were melted into a liquid state, they were injected into a die cavity special for making feed. The die was provided with cooling circulation water for the rapid cooling of the feed as a melted liquid state into a solid block. The solid block was then taken out and cracked into small pieces of raw materials of less than 20 mm.
(2) Injection molding. The small pieces of raw materials of less than 20 mm were added into a storage bin of an injection device, and vacuumization was carried out until below 500 Pa. In this vacuum or argon protection state, the raw materials were heated to above 700°C by high-frequency heating. After the raw materials were completely melted, they were automatically poured into an injection chamber, and the melt was injected into a die at a high speed greater than 0.5 m/s and a high pressure to obtain a needle injection blank for the warp knitting machine. The die temperature was preferably 180-220°C.
(3) Sprue removal. The needle injection blank for the warp knitting machine connected to the material rod was placed into a positioning tool special for laser cutting, and the positioning tool was mounted on a workbench of a laser cutting machine. The start button was pressed to automatically start a set program, allowing the laser cutting machine to emit laser light to cut the material rod on the needle for the warp knitting machine, leaving a margin of 0.05 mm from the cutting position to the needle for the next processing. The cut needle blank for the warp knitting machine was fixed neatly in batches on a positioning tool special for a grinder. After the fixing, grinding was carried out to remove the excess of the sprue, with a Z-axis feed amount of preferably 0.01 mm each time, until the sprue was level with the edge of the product.
(4) Thickness processing. The sprue-removed needle blank for the warp knitting machine was placed on the grinder, and two large surfaces of the needle blank for the warp knitting machine were ground to a certain thickness.
(5) Slotting. A positioning tool for slotting was placed on a platform of a scribing machine. The thickness-processed needle blank for the warp knitting machine was placed in the positioning tool for slotting. The scribing machine was started, allowing a blade on the scribing machine to rotate rapidly and the head part loaded with the blade to move according to a predetermined trajectory. The needle blank was whittled with the blade according to the movement trajectory to obtain a slotted needle blank.
(6) Polishing. The slotted needle blank was placed into a polishing jig. The polishing jig was held close to a polishing wheel to polish the slotted needle blank until the polishing was completed to obtain a needle blank.
(7) Electroplating. The polished needle blank was cleaned well, placed on an electroplating jig, and heated in a furnace for surface treatment. The product was taken out of the furnace after a certain period of time, and a layer of coating was formed on the surface of the product, with a greatly improved wear resistance of the product. The electroplating was completed.

Due to the development of science and technology, the existing industry standards can no longer satisfy the requirements for evaluating the performance of existing needles for the warp knitting machine. In this case, an elasticity testing tool for the needle for the warp knitting machine was added in order to carry out a comprehensive test on the elasticity, fatigue, deformation and other properties of the needle for the warp knitting machine. The elasticity testing tool for the needle simulates the working conditions of the needle for the warp knitting machine. It can further test the elasticity, fatigue and deformation of the needle for the warp knitting machine, and accurately test the different performance effects of different feeding ratios on the needle for the warp knitting machine. As shown in FIG. 3, the elasticity testing tool for the needle includes a base plate 1. The needle for the warp knitting machine is fixed on the base plate 1 by means of screws 6 and a pressing block 4. A cylinder 7 is provided above a needle core 2 of the needle for the warp knitting machine. A fixing block 11 is provided on a connecting rod 5 of the cylinder 7, and an iron block 3 is provided at the bottom of the fixing block 11. The iron block 3 repeatedly performs a short-distance downward pressure action on the position of a force point 14 on the needle core 2 of the needle head through the back and forth movement of the cylinder 7, as shown in FIG. 4 to FIG. 9, until the needle head breaks. The elasticity testing tool is provided with a control unit having a counter. The control unit controls the air inlet and outlet of the cylinder to move the cylinder up and down. The counter serves to record the number of elasticity tests. Each of the iron block 3 and the base plate 1 is provided with a wire to connect to the control unit. An insulating block 9 separates the circuits of the iron block 3 and the base plate 1. Since both the product and the tool are metal with electrical conductivity, at the moment when the iron block 3 is pressed down onto the product, the circuit of the iron block 3 is electronically connected to the circuit of the base plate 1. The control unit identifies and confirms that it is valid, and then issues a command, and the cylinder is raised and then lowered for the next cycle. If the head of the needle for the warp knitting machine is broken, the iron block 3 cannot contact the product in the pressing down process under the action of the cylinder, and the circuit of the iron block 3 cannot be electrically connected to the circuit of the bottom plate 1. After the control unit identifies that the circuit is open, the cylinder and the elasticity testing tool will stop working and a buzzer will alarm. The reading of the counter will stay at the number of times of pressing down at this moment. In this way, the test results of the elastic properties of the needle product for the warp knitting machine are obtained. In the elasticity test, the contact and pressing position of the tool and the needle for the warp knitting machine is shown as the force point 14 in FIG. 4. The pressing frequency is 50 times per minute, and the pressing amplitude is 0.1 mm as shown in FIG. 9. The test results show that the number of elasticity tests is 18756 times, which is 1.5 times that of existing needle products.

In addition, toughness test, fracture test and tensile test are carried out based on the National Textile Industry Standard FZ/T97018-1999. The fracture angle test data of the needle hook is 49°, and the qualified standard is 35°<a<75°. The fracture angle test data of the needle core is 36°, and the qualified standard is a>30°. The fracture strength test data is 31 N/m², and the qualified standard is ≥24 N/m². The tensile strength test data is 26.5 N, and the qualified standard is ≥19.6 N. After testing, the results of the elasticity test, the fracture angle test of the needle hook, the fracture angle test of the needle core, the fracture strength test, and the tensile strength test all meet the product requirements.

Fracture angle test of the needle hook: As shown in FIG. 4, with the needle hook as the fixed fulcrum, the needle body is pulled and swung around the fulcrum. The swing angle is regarded as the ductile fracture angle of the needle hook: 35°< a<75°.

Fracture angle test of the needle core: As shown in FIG. 5, with the tail of the needle core to the center of the bend as the fixed fulcrum, the upper part of the needle core is pulled and swung around the fulcrum. The swing angle is regarded as the ductile fracture angle of the needle core: a>30°.

Fracture strength test: The needle is placed on a fracture strength tester, and the impact position is set in the middle of the needle. The impact direction is the view surface of FIG. 1. The fracture strength test data is obtained, and the standard requirement is ≥24 N/m².

Tensile strength test: The needle is placed on a tensile tester. The tail of the needle is fixed, and a silk thread passes through the hook at the head. Then the tensile test is carried out and the test data is obtained. The standard requirement is ≥19.6 N.

In Example 2 to Example 45, because zirconium accounts for a large proportion, it is freely allocated. Only one element of copper, nickel, titanium, aluminum, beryllium, and yttrium is changed in each example, and their most reasonable ranges are tested in a unit increment. Based on the number of elasticity tests of 12000, a suitable range for each element is defined.

Example 2: The similarities between this example and Example 1 will not be repeated here, and the difference is the proportions of raw materials: 63 parts of zirconium powder, 12 parts of copper powder, 10 parts of nickel powder, 9 parts of titanium powder, 6 parts of aluminum powder, 0 parts of beryllium powder, and 0 parts of yttrium powder. In Example 2, beryllium and yttrium were not added. The number of elasticity tests of the needle product for the warp knitting machine is 5616 times, and the qualified standard is 12000 times. The fracture angle test data of the needle hook is 27°, and the qualified standard is 35°<a<75°. The fracture angle test data of the needle core is 22°, and the qualified standard is a>30°. The fracture strength test data is 17 N/m², and the qualified standard is ≥24 N/m². The tensile strength test data is 15.2 N, and the qualified standard is ≥19.6 N. After testing, the results of the elasticity test, the fracture angle test of the needle hook, the fracture angle test of the needle core, the fracture strength test, and the tensile strength test are all unqualified and cannot meet the product requirements.

Example 3: The similarities between this example and Example 1 will not be repeated here, and the difference is the proportions of raw materials: 62.5 parts of zirconium powder, 11 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 12230 times. The fracture angle test data of the needle hook is 36°, and the qualified standard is 35°<a<75°. The fracture angle test data of the needle core is 32°, and the qualified standard is a>30°. The fracture strength test data is 28 N/m², and the qualified standard is ≥24 N/m². The tensile strength test data is 23.3 N, and the qualified standard is ≥19.6 N.

Example 4: The similarities between this example and Example 1 will not be repeated here, and the difference is the proportions of raw materials: 61.5 parts of zirconium powder, 12 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 13986 times. The fracture angle test data of the needle hook is 36°, and the qualified standard is 35°<a<75°. The fracture angle test data of the needle core is 33°, and the qualified standard is a>30°. The fracture strength test data is 27 N/m², and the qualified standard is ≥24 N/m². The tensile strength test data is 23.1 N, and the qualified standard is ≥19.6 N.

Example 5: The similarities between this example and Example 1 will not be repeated here, and the difference is the proportions of raw materials: 60.5 parts of zirconium powder, 13 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 14364 times. The fracture angle test data of the needle hook is 40°, and the qualified standard is 35°<a<75°. The fracture angle test data of the needle core is 36°, and the qualified standard is a>30°. The fracture strength test data is 27 N/m², and the qualified standard is ≥24 N/m². The tensile strength test data is 24.2 N, and the qualified standard is ≥19.6 N.

Example 6: The similarities between this example and Example 1 will not be repeated here, and the difference is the proportions of raw materials: 59.5 parts of zirconium powder, 14 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 14659 times. The fracture angle test data of the needle hook is 38°, and the qualified standard is 35°<a<75°. The fracture angle test data of the needle core is 33°, and the qualified standard is a>30°. The fracture strength test data is 28 N/m², and the qualified standard is ≥24 N/m². The tensile strength test data is 24.7 N, and the qualified standard is ≥19.6 N.

Example 7: The similarities between this example and Example 1 will not be repeated here, and the difference is the proportions of raw materials: 58.5 parts of zirconium powder, 15 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 13653 times. The fracture angle test data of the needle hook is 37°, and the qualified standard is 35°<a<75°. The fracture angle test data of the needle core is 34°, and the qualified standard is a>30°. The fracture strength test data is 26 N/m², and the qualified standard is ≥24 N/m². The tensile strength test data is 24.5 N, and the qualified standard is ≥19.6 N.

Example 8: The similarities between this example and Example 1 will not be repeated here, and the difference is the proportions of raw materials: 57.5 parts of zirconium powder, 16 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 12332 times. The fracture angle test data of the needle hook is 37°, and the qualified standard is 35°<a<75°. The fracture angle test data of the needle core is 33°, and the qualified standard is a>30°. The fracture strength test data is 25 N/m², and the qualified standard is ≥24 N/m². The tensile strength test data is 24.8 N, and the qualified standard is ≥19.6 N.

In Example 3 to Example 8, zirconium element is freely allocated, and the proportion of copper is gradually varied to determine the range of copper element. After testing, the elasticity test of the needle for the warp knitting machine obtained in the range of 11 parts to 16 parts of copper element is more than 12,000 times, and the performance requirements fully comply with the requirements for the toughness test, fracture test and tensile test in the National Textile Industry Standard FZ/T97018-1999, and meet the quality requirements of the needle for the warp knitting machine.

Example 9: The similarities between this example and Example 1 will not be repeated here, and the difference is the proportions of raw materials: 64.5 parts of zirconium powder, 9 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 9236 times. The fracture angle test data of the needle hook is 34°, and the qualified standard is 35°<a<75°. The fracture angle test data of the needle core is 30°, and the qualified standard is a>30°. The fracture strength test data is 24 N/m², and the qualified standard is ≥24 N/m². The tensile strength test data is 22.6 N, and the qualified standard is ≥19.6 N. The fracture angle test result of the needle hook and the fracture angle test result of the needle core are unqualified.

Example 10: The similarities between this example and Example 1 will not be repeated here, and the difference is the proportions of raw materials: 63.5 parts of zirconium powder, 10 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 10547 times. The fracture angle test data of the needle hook is 35°, and the qualified standard is 35°<a<75°. The fracture angle test data of the needle core is 31°, and the qualified standard is a>30°. The fracture strength test data is 24 N/m², and the qualified standard is ≥24 N/m². The tensile strength test data is 23.6 N, and the qualified standard is ≥19.6 N. The elasticity test result is unqualified.

Example 11: The similarities between this example and Example 1 will not be repeated here, and the difference is the proportions of raw materials: 56.5 parts of zirconium powder, 17 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 10863 times. The fracture angle test data of the needle hook is 38°, and the qualified standard is 35°<a<75°. The fracture angle test data of the needle core is 35°, and the qualified standard is a>30°. The fracture strength test data is 22 N/m², and the qualified standard is ≥24 N/m². The tensile strength test data is 19.1 N, and the qualified standard is ≥19.6 N. The fracture angle test result and the tensile strength test result are unqualified.

In Example 9 to Example 11, zirconium element is freely allocated, and the proportion of copper is gradually varied to determine the range of copper element. The obtained needle for the warp knitting machine is comprehensively subjected to the elasticity test, as well as the toughness test, fracture test and tensile test in the National Textile Industry Standard FZ/T97018-1999. It is concluded that the needle for the warp knitting machine is adversely affected when the proportion of the copper element is ≤11 parts or ≥17 parts.

Example 12: The similarities between this example and Example 1 will not be repeated here, and the difference is the proportions of raw materials: 62.5 parts of zirconium powder, 13 parts of copper powder, 8 parts of nickel powder, 10 parts of titanium powder, 3 parts of aluminum powder, 3 parts of beryllium powder, and 0.5 parts of yttrium powder. The number of elasticity tests of the needle product for the warp knitting machine is 13332 times. The fracture angle test data of the needle hook is 37°, and the qualified standard is 35°<a<75°. The fracture angle test data of the needle core is 32°, and the qualified standard is a>30°. The fracture strength test data is 24 N/m², and the qualified standard is ≥24 N/m². The tensile strength test data is 20.2 N, and the qualified standard is ≥19.6 N.

Example 13: The similarities between this example and Example 1 will not be repeated here, and the difference is the proportions of raw materials: 61.5 parts of zirconium powder, 13 parts of copper powder, 9 parts of nickel powder, 10 parts of titanium powder, 3 parts of aluminum powder, 3 parts of beryllium powder, and 0.5 parts of yttrium powder. The number of elasticity tests of the needle product for the warp knitting machine is 14697 times. The fracture angle test data of the needle hook is 39°, and the qualified standard is 35°<a<75°. The fracture angle test data of the needle core is 34°, and the qualified standard is a>30°. The fracture strength test data is 25 N/m², and the qualified standard is ≥24 N/m². The tensile strength test data is 21.9 N, and the qualified standard is ≥19.6 N.

Example 14: The similarities between this example and Example 1 will not be repeated here, and the difference is the proportions of raw materials: 60.5 parts of zirconium powder, 13 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 15341 times. The fracture angle test data of the needle hook is 41°, and the qualified standard is 35°<a<75°. The fracture angle test data of the needle core is 36°, and the qualified standard is a>30°. The fracture strength test data is 28 N/m², and the qualified standard is ≥24 N/m². The tensile strength test data is 24.3 N, and the qualified standard is ≥19.6 N.

Example 15: The similarities between this example and Example 1 will not be repeated here, and the difference is the proportions of raw materials: 59.5 parts of zirconium powder, 13 parts of copper powder, 11 parts of nickel powder, 10 parts of titanium powder, 3 parts of aluminum powder, 3 parts of beryllium powder, and 0.5 parts of yttrium powder. The number of elasticity tests of the needle product for the warp knitting machine is 12996 times. The fracture angle test data of the needle hook is 37°, and the qualified standard is 35°<a<75°. The fracture angle test data of the needle core is 33°, and the qualified standard is a>30°. The fracture strength test data is 28 N/m², and the qualified standard is ≥24 N/m². The tensile strength test data is 24.5 N, and the qualified standard is ≥19.6 N.

Example 16: The similarities between this example and Example 1 will not be repeated here, and the difference is the proportions of raw materials: 58.5 parts of zirconium powder, 13 parts of copper powder, 12 parts of nickel powder, 10 parts of titanium powder, 3 parts of aluminum powder, 3 parts of beryllium powder, and 0.5 parts of yttrium powder. The number of elasticity tests of the needle product for the warp knitting machine is 14476 times. The fracture angle test data of the needle hook is 36°, and the qualified standard is 35°<a<75°. The fracture angle test data of the needle core is 34°, and the qualified standard is a>30°. The fracture strength test data is 28 N/m², and the qualified standard is ≥24 N/m². The tensile strength test data is 25.4 N, and the qualified standard is ≥19.6 N.

Example 17: The similarities between this example and Example 1 will not be repeated here, and the difference is the proportions of raw materials: 57.5 parts of zirconium powder, 13 parts of copper powder, 13 parts of nickel powder, 10 parts of titanium powder, 3 parts of aluminum powder, 3 parts of beryllium powder, and 0.5 parts of yttrium powder. The number of elasticity tests of the needle product for the warp knitting machine is 14163 times. The fracture angle test data of the needle hook is 36°, and the qualified standard is 35°<a<75°. The fracture angle test data of the needle core is 33°, and the qualified standard is a>30°. The fracture strength test data is 27 N/m², and the qualified standard is ≥24 N/m². The tensile strength test data is 25.6 N, and the qualified standard is ≥19.6 N.

In Example 12 to Example 17, zirconium element is freely allocated, and the proportion of nickel is gradually varied to determine the range of nickel element. The obtained needle for the warp knitting machine is comprehensively subjected to the elasticity test, as well as the toughness test, fracture test and tensile test in the National Textile Industry Standard FZ/T97018-1999. After testing, the elasticity test of the needle for the warp knitting machine obtained in the range of 8 parts to 13 parts of nickel element is more than 12,000 times, which meet the quality requirements of the needle for the warp knitting machine.

Example 18: The similarities between this example and Example 1 will not be repeated here, and the difference is the proportions of raw materials: 63.5 parts of zirconium powder, 13 parts of copper powder, 7 parts of nickel powder, 10 parts of titanium powder, 3 parts of aluminum powder, 3 parts of beryllium powder, and 0.5 parts of yttrium powder. The number of elasticity tests of the needle product for the warp knitting machine is 12054 times. The fracture angle test data of the needle hook is 37°, and the qualified standard is 35°<a<75°. The fracture angle test data of the needle core is 33°, and the qualified standard is a>30°. The fracture strength test data is 22 N/m², and the qualified standard is ≥24 N/m². The tensile strength test data is 20.7 N, and the qualified standard is ≥19.6 N. The fracture strength test result is unqualified.

Example 19: The similarities between this example and Example 1 will not be repeated here, and the difference is the proportions of raw materials: 56.5 parts of zirconium powder, 13 parts of copper powder, 14 parts of nickel powder, 10 parts of titanium powder, 3 parts of aluminum powder, 3 parts of beryllium powder, and 0.5 parts of yttrium powder. The number of elasticity tests of the needle product for the warp knitting machine is 11623 times. The fracture angle test data of the needle hook is 35°, and the qualified standard is 35°<a<75°. The fracture angle test data of the needle core is 34°, and the qualified standard is a>30°. The fracture strength test data is 28 N/m², and the qualified standard is ≥24 N/m². The tensile strength test data is 26.8 N, and the qualified standard is ≥19.6 N. The elasticity test result and the fracture angle test result of the needle hook are unqualified.

In Example 18 to Example 19, zirconium element is freely allocated, and the proportion of nickel is gradually varied to determine the range of nickel element. The obtained needle for the warp knitting machine is comprehensively subjected to the elasticity test, as well as the toughness test, fracture test and tensile test in the National Textile Industry Standard FZ/T97018-1999. It is concluded that the needle for the warp knitting machine is adversely affected when the proportion of the nickel element is ≤7 parts or ≥14 parts.

Example 20: The similarities between this example and Example 1 will not be repeated here, and the difference is the proportions of raw materials: 65.5 parts of zirconium powder, 13 parts of copper powder, 10 parts of nickel powder, 5 parts of titanium powder, 3 parts of aluminum powder, 3 parts of beryllium powder, and 0.5 parts of yttrium powder. The number of elasticity tests of the needle product for the warp knitting machine is 12695 times. The fracture angle test data of the needle hook is 38°, and the qualified standard is 35°<a<75°. The fracture angle test data of the needle core is 33°, and the qualified standard is a>30°. The fracture strength test data is 24 N/m², and the qualified standard is ≥24 N/m². The tensile strength test data is 22.1 N, and the qualified standard is ≥19.6 N.

Example 21: The similarities between this example and Example 1 will not be repeated here, and the difference is the proportions of raw materials: 64.5 parts of zirconium powder, 13 parts of copper powder, 10 parts of nickel powder, 6 parts of titanium powder, 3 parts of aluminum powder, 3 parts of beryllium powder, and 0.5 parts of yttrium powder. The number of elasticity tests of the needle product for the warp knitting machine is 13249 times. The fracture angle test data of the needle hook is 39°, and the qualified standard is 35°<a<75°. The fracture angle test data of the needle core is 32°, and the qualified standard is a>30°. The fracture strength test data is 24 N/m², and the qualified standard is ≥24 N/m². The tensile strength test data is 21.2 N, and the qualified standard is ≥19.6 N.

Example 22: The similarities between this example and Example 1 will not be repeated here, and the difference is the proportions of raw materials: 63.5 parts of zirconium powder, 13 parts of copper powder, 10 parts of nickel powder, 7 parts of titanium powder, 3 parts of aluminum powder, 3 parts of beryllium powder, and 0.5 parts of yttrium powder. The number of elasticity tests of the needle product for the warp knitting machine is 14655 times. The fracture angle test data of the needle hook is 41°, and the qualified standard is 35°<a<75°. The fracture angle test data of the needle core is 37°, and the qualified standard is a>30°. The fracture strength test data is 26 N/m², and the qualified standard is ≥24 N/m². The tensile strength test data is 21.2 N, and the qualified standard is ≥19.6 N.

Example 23: The similarities between this example and Example 1 will not be repeated here, and the difference is the proportions of raw materials: 62.5 parts of zirconium powder, 13 parts of copper powder, 10 parts of nickel powder, 8 parts of titanium powder, 3 parts of aluminum powder, 3 parts of beryllium powder, and 0.5 parts of yttrium powder. The number of elasticity tests of the needle product for the warp knitting machine is 16276 times. The fracture angle test data of the needle hook is 42°, and the qualified standard is 35°<a<75°. The fracture angle test data of the needle core is 38°, and the qualified standard is a>30°. The fracture strength test data is 28 N/m², and the qualified standard is ≥24 N/m². The tensile strength test data is 24 N, and the qualified standard is ≥19.6 N.

Example 24: The similarities between this example and Example 1 will not be repeated here, and the difference is the proportions of raw materials: 61.5 parts of zirconium powder, 13 parts of copper powder, 10 parts of nickel powder, 9 parts of titanium powder, 3 parts of aluminum powder, 3 parts of beryllium powder, and 0.5 parts of yttrium powder. The number of elasticity tests of the needle product for the warp knitting machine is 15366 times. The fracture angle test data of the needle hook is 38°, and the qualified standard is 35°<a<75°. The fracture angle test data of the needle core is 31°, and the qualified standard is a>30°. The fracture strength test data is 27 N/m², and the qualified standard is ≥24 N/m². The tensile strength test data is 24.6 N, and the qualified standard is ≥19.6 N.

Example 25: The similarities between this example and Example 1 will not be repeated here, and the difference is the proportions of raw materials: 60.5 parts of zirconium powder, 13 parts of copper powder, 10 parts of nickel powder, 10 parts of titanium powder, 3 parts of aluminum powder, 3 parts of beryllium powder, and 0.5 parts of yttrium powder. The number of elasticity tests of the needle product for the warp knitting machine is 15236 times. The fracture angle test data of the needle hook is 39°, and the qualified standard is 35°<a<75°. The fracture angle test data of the needle core is 33°, and the qualified standard is a>30°. The fracture strength test data is 29 N/m², and the qualified standard is ≥24 N/m². The tensile strength test data is 24.8 N, and the qualified standard is ≥19.6 N.

In Example 20 to Example 25, zirconium element is freely allocated, and the proportion of titanium is gradually varied to determine the range of titanium element. The obtained needle for the warp knitting machine is comprehensively subjected to the elasticity test, as well as the toughness test, fracture test and tensile test in the National Textile Industry Standard FZ/T97018-1999. After testing, the elasticity test of the needle for the warp knitting machine obtained in the range of 5 parts to 10 parts of titanium element is more than 12,000 times, which meet the quality requirements of the needle for the warp knitting machine.

Example 26: The similarities between this example and Example 1 will not be repeated here, and the difference is the proportions of raw materials: 66.5 parts of zirconium powder, 13 parts of copper powder, 10 parts of nickel powder, 4 parts of titanium powder, 3 parts of aluminum powder, 3 parts of beryllium powder, and 0.5 parts of yttrium powder. The number of elasticity tests of the needle product for the warp knitting machine is 11356 times, unqualified. The fracture angle test data of the needle hook is 36°, and the qualified standard is 35°<a<75°. The fracture angle test data of the needle core is 30°, and the qualified standard is a>30°. The fracture strength test data is 17 N/m², and the qualified standard is ≥24 N/m². The tensile strength test data is 21.9 N, and the qualified standard is ≥19.6 N. The fracture angle test result of the needle core and the fracture strength test result are unqualified.

Example 27: The similarities between this example and Example 1 will not be repeated here, and the difference is the proportions of raw materials: 59.5 parts of zirconium powder, 13 parts of copper powder, 10 parts of nickel powder, 11 parts of titanium powder, 3 parts of aluminum powder, 3 parts of beryllium powder, and 0.5 parts of yttrium powder. The number of elasticity tests of the needle product for the warp knitting machine is 10035 times. The fracture angle test data of the needle hook is 37°, and the qualified standard is 35°<a<75°. The fracture angle test data of the needle core is 28°, and the qualified standard is a>30°. The fracture strength test data is 29 N/m², and the qualified standard is ≥24 N/m². The tensile strength test data is 23.8 N, and the qualified standard is ≥19.6 N. The elasticity test result is unqualified.

In Example 26 to Example 27, zirconium element is freely allocated, and the proportion of titanium is gradually varied to determine the range of titanium element. The obtained needle for the warp knitting machine is comprehensively subjected to the elasticity test, as well as the toughness test, fracture test and tensile test in the National Textile Industry Standard FZ/T97018-1999. It is concluded that the needle for the warp knitting machine is adversely affected when the proportion of the titanium element is ≤4 parts or ≥11 parts.

Example 28: The similarities between this example and Example 1 will not be repeated here, and the difference is the proportions of raw materials: 64.5 parts of zirconium powder, 13 parts of copper powder, 10 parts of nickel powder, 8 parts of titanium powder, 1 part of aluminum powder, 3 parts of beryllium powder, and 0.5 parts of yttrium powder. The number of elasticity tests of the needle product for the warp knitting machine is 12368 times. The fracture angle test data of the needle hook is 36°, and the qualified standard is 35°<a<75°. The fracture angle test data of the needle core is 34°, and the qualified standard is a>30°. The fracture strength test data is 27 N/m², and the qualified standard is ≥24 N/m². The tensile strength test data is 20.3 N, and the qualified standard is ≥19.6 N.

Example 29: The similarities between this example and Example 1 will not be repeated here, and the difference is the proportions of raw materials: 63.5 parts of zirconium powder, 13 parts of copper powder, 10 parts of nickel powder, 8 parts of titanium powder, 2 parts of aluminum powder, 3 parts of beryllium powder, and 0.5 parts of yttrium powder. The number of elasticity tests of the needle product for the warp knitting machine is 13657 times. The fracture angle test data of the needle hook is 37°, and the qualified standard is 35°<a<75°. The fracture angle test data of the needle core is 35°, and the qualified standard is a>30°. The fracture strength test data is 29 N/m², and the qualified standard is ≥24 N/m². The tensile strength test data is 20.2 N, and the qualified standard is ≥19.6 N.

Example 30: The similarities between this example and Example 1 will not be repeated here, and the difference is the proportions of raw materials: 62.5 parts of zirconium powder, 13 parts of copper powder, 10 parts of nickel powder, 8 parts of titanium powder, 3 parts of aluminum powder, 3 parts of beryllium powder, and 0.5 parts of yttrium powder. The number of elasticity tests of the needle product for the warp knitting machine is 16459 times. The fracture angle test data of the needle hook is 42°, and the qualified standard is 35°<a<75°. The fracture angle test data of the needle core is 38°, and the qualified standard is a>30°. The fracture strength test data is 28 N/m², and the qualified standard is ≥24 N/m². The tensile strength test data is 24.6 N, and the qualified standard is ≥19.6 N.

Example 31: The similarities between this example and Example 1 will not be repeated here, and the difference is the proportions of raw materials: 61.5 parts of zirconium powder, 13 parts of copper powder, 10 parts of nickel powder, 8 parts of titanium powder, 4 parts of aluminum powder, 3 parts of beryllium powder, and 0.5 parts of yttrium powder. The number of elasticity tests of the needle product for the warp knitting machine is 15648 times. The fracture angle test data of the needle hook is 41°, and the qualified standard is 35°<a<75°. The fracture angle test data of the needle core is 39°, and the qualified standard is a>30°. The fracture strength test data is 26 N/m², and the qualified standard is ≥24 N/m². The tensile strength test data is 23.9 N, and the qualified standard is ≥19.6 N.

Example 32: The similarities between this example and Example 1 will not be repeated here, and the difference is the proportions of raw materials: 60.5 parts of zirconium powder, 13 parts of copper powder, 10 parts of nickel powder, 8 parts of titanium powder, 5 parts of aluminum powder, 3 parts of beryllium powder, and 0.5 parts of yttrium powder. The number of elasticity tests of the needle product for the warp knitting machine is 12633 times. The fracture angle test data of the needle hook is 40°, and the qualified standard is 35°<a<75°. The fracture angle test data of the needle core is 37°, and the qualified standard is a>30°. The fracture strength test data is 24 N/m², and the qualified standard is ≥24 N/m². The tensile strength test data is 21.3 N, and the qualified standard is ≥19.6 N.

In Example 28 to Example 32, zirconium element is freely allocated, and the proportion of aluminum is gradually varied to determine the range of aluminum element. The obtained needle for the warp knitting machine is comprehensively subjected to the elasticity test, as well as the toughness test, fracture test and tensile test in the National Textile Industry Standard FZ/T97018-1999. After testing, the elasticity test of the needle for the warp knitting machine obtained in the range of 1 part to 5 parts of aluminum element is more than 12,000 times, which meet the quality requirements of the needle for the warp knitting machine.

Example 33: The similarities between this example and Example 1 will not be repeated here, and the difference is the proportions of raw materials: 65 parts of zirconium powder, 13 parts of copper powder, 10 parts of nickel powder, 8 parts of titanium powder, 0.5 parts of aluminum powder, 3 parts of beryllium powder, and 0.5 parts of yttrium powder. The number of elasticity tests of the needle product for the warp knitting machine is 8360 times. The fracture angle test data of the needle hook is 31°, and the qualified standard is 35°<a<75°. The fracture angle test data of the needle core is 30°, and the qualified standard is a>30°. The fracture strength test data is 27 N/m², and the qualified standard is ≥24 N/m². The tensile strength test data is 15.7 N, and the qualified standard is ≥19.6 N. The elasticity test result, the fracture angle test result of the needle kook, the fracture angle test result of the needle core and the tensile strength test result are unqualified.

Example 34: The similarities between this example and Example 1 will not be repeated here, and the difference is the proportions of raw materials: 59.5 parts of zirconium powder, 13 parts of copper powder, 10 parts of nickel powder, 8 parts of titanium powder, 6 parts of aluminum powder, 3 parts of beryllium powder, and 0.5 parts of yttrium powder. The number of elasticity tests of the needle product for the warp knitting machine is 12469 times. The fracture angle test data of the needle hook is 38°, and the qualified standard is 35°<a<75°. The fracture angle test data of the needle core is 32°, and the qualified standard is a>30°. The fracture strength test data is 21 N/m², and the qualified standard is ≥24 N/m². The tensile strength test data is 19 N, and the qualified standard is ≥19.6 N. The fracture strength test result and the tensile strength test result are unqualified.

**In** Example 33 to Example 34, zirconium element is freely allocated, and the proportion of aluminum is gradually varied to determine the range of aluminum element. The obtained needle for the warp knitting machine is comprehensively subjected to the elasticity test, as well as the toughness test, fracture test and tensile test in the National Textile Industry Standard FZ/T97018-1999. It is concluded that the needle for the warp knitting machine is adversely affected when the proportion of the aluminum element is ≤0.5 parts or ≥6 parts.

Example 35: The similarities between this example and Example 1 will not be repeated here, and the difference is the proportions of raw materials: 64.5 parts of zirconium powder, 13 parts of copper powder, 10 parts of nickel powder, 8 parts of titanium powder, 3 parts of aluminum powder, 1 part of beryllium powder, and 0.5 parts of yttrium powder. The number of elasticity tests of the needle product for the warp knitting machine is 12257 times. The fracture angle test data of the needle hook is 36°, and the qualified standard is 35°<a<75°. The fracture angle test data of the needle core is 31°, and the qualified standard is a>30°. The fracture strength test data is 24 N/m², and the qualified standard is ≥24 N/m². The tensile strength test data is 22.3 N, and the qualified standard is ≥19.6 N.

Example 36: The similarities between this example and Example 1 will not be repeated here, and the difference is the proportions of raw materials: 63.5 parts of zirconium powder, 13 parts of copper powder, 10 parts of nickel powder, 8 parts of titanium powder, 3 parts of aluminum powder, 2 parts of beryllium powder, and 0.5 parts of yttrium powder. The number of elasticity tests of the needle product for the warp knitting machine is 14589 times. The fracture angle test data of the needle hook is 36°, and the qualified standard is 35°<a<75°. The fracture angle test data of the needle core is 32°, and the qualified standard is a>30°. The fracture strength test data is 25 N/m², and the qualified standard is ≥24 N/m². The tensile strength test data is 23.5 N, and the qualified standard is ≥19.6 N.

Example 37: The similarities between this example and Example 1 will not be repeated here, and the difference is the proportions of raw materials: 62.5 parts of zirconium powder, 13 parts of copper powder, 10 parts of nickel powder, 8 parts of titanium powder, 3 parts of aluminum powder, 3 parts of beryllium powder, and 0.5 parts of yttrium powder. The number of elasticity tests of the needle product for the warp knitting machine is 16645 times. The fracture angle test data of the needle hook is 42°, and the qualified standard is 35°<a<75°. The fracture angle test data of the needle core is 37°, and the qualified standard is a>30°. The fracture strength test data is 27 N/m², and the qualified standard is ≥24 N/m². The tensile strength test data is 25.7 N, and the qualified standard is ≥19.6 N.

Example 38: The similarities between this example and Example 1 will not be repeated here, and the difference is the proportions of raw materials: 61.5 parts of zirconium powder, 13 parts of copper powder, 10 parts of nickel powder, 8 parts of titanium powder, 3 parts of aluminum powder, 4 parts of beryllium powder, and 0.5 parts of yttrium powder. The number of elasticity tests of the needle product for the warp knitting machine is 16447 times. The fracture angle test data of the needle hook is 43°, and the qualified standard is 35°<a<75°. The fracture angle test data of the needle core is 37°, and the qualified standard is a>30°. The fracture strength test data is 26 N/m², and the qualified standard is ≥24 N/m². The tensile strength test data is 25.1 N, and the qualified standard is ≥19.6 N.

In Example 35 to Example 38, zirconium element is freely allocated, and the proportion of beryllium powder is gradually varied to determine the range of beryllium powder. The obtained needle for the warp knitting machine is comprehensively subjected to the elasticity test, as well as the toughness test, fracture test and tensile test in the National Textile Industry Standard FZ/T97018-1999. After testing, the elasticity test of the needle for the warp knitting machine obtained in the range of 1 part to 4 parts of beryllium powder is more than 12,000 times, which meet the quality requirements of the needle for the warp knitting machine.

Example 39: The similarities between this example and Example 1 will not be repeated here, and the difference is the proportions of raw materials: 65 parts of zirconium powder, 13 parts of copper powder, 10 parts of nickel powder, 8 parts of titanium powder, 3 parts of aluminum powder, 0.5 parts of beryllium powder, and 0.5 parts of yttrium powder. The number of elasticity tests of the needle product for the warp knitting machine is 10369 times, and the elasticity test result is unqualified. The fracture angle test data of the needle hook is 28°, and the qualified standard is 35°<a<75°. The fracture angle test data of the needle core is 24°, and the qualified standard is a>30°. The fracture strength test data is 19 N/m², and the qualified standard is ≥24 N/m². The tensile strength test data is 21.7 N, and the qualified standard is ≥19.6 N. The fracture angle test result of the needle hook, the fracture angle test result of the needle core and the fracture strength test result are unqualified. It is concluded that the needle for the warp knitting machine is adversely affected when the proportion of beryllium powder is ≤0.5 parts.

Example 40: The similarities between this example and Example 1 will not be repeated here, and the difference is the proportions of raw materials: 60.5 parts of zirconium powder, 13 parts of copper powder, 10 parts of nickel powder, 8 parts of titanium powder, 3 parts of aluminum powder, 5 parts of beryllium powder, and 0.5 parts of yttrium powder. The number of elasticity tests of the needle product for the warp knitting machine is 14136 times. After testing, the elasticity test data of the obtained needle for the warp knitting machine is lower than 16447 times of Example 38. The fracture angle test data of the needle hook is 43°, and the qualified standard is 35°<a<75°. The fracture angle test data of the needle core is 37°, and the qualified standard is a>30°. The fracture strength test data is 29 N/m², and the qualified standard is ≥24 N/m². The tensile strength test data is 26.5 N, and the qualified standard is ≥19.6 N. The data of the fracture angle test of the needle hook, the fracture angle test of the needle core, the fracture strength test and the tensile strength test are approximate to those of Example 38. Because the price of beryllium powder is higher than that of zirconium powder, considering the economic cost, it is concluded that the proportion of beryllium powder ≥5 parts is not suitable for the needle for the warp knitting machine.

Example 41: The similarities between this example and Example 1 will not be repeated here, and the difference is the proportions of raw materials: 62.7 parts of zirconium powder, 13 parts of copper powder, 10 parts of nickel powder, 8 parts of titanium powder, 3 parts of aluminum powder, 3 parts of beryllium powder, and 0.3 parts of yttrium powder. The number of elasticity tests of the needle product for the warp knitting machine is 12863 times. The fracture angle test data of the needle hook is 38°, and the qualified standard is 35°<a<75°. The fracture angle test data of the needle core is 34°, and the qualified standard is a>30°. The fracture strength test data is 27 N/m², and the qualified standard is ≥24 N/m². The tensile strength test data is 24.3 N, and the qualified standard is ≥19.6 N.

Example 42: The similarities between this example and Example 1 will not be repeated here, and the difference is the proportions of raw materials: 62.4 parts of zirconium powder, 13 parts of copper powder, 10 parts of nickel powder, 8 parts of titanium powder, 3 parts of aluminum powder, 3 parts of beryllium powder, and 0.6 parts of yttrium powder. The number of elasticity tests of the needle product for the warp knitting machine is 16482 times. The fracture angle test data of the needle hook is 42°, and the qualified standard is 35°<a<75°. The fracture angle test data of the needle core is 37°, and the qualified standard is a>30°. The fracture strength test data is 28 N/m², and the qualified standard is ≥24 N/m². The tensile strength test data is 24.2 N, and the qualified standard is ≥19.6 N.

In Example 41 to Example 42 and Example 1, zirconium element is freely allocated, and the proportion of yttrium is gradually varied to determine the range of yttrium element. The obtained needle for the warp knitting machine is comprehensively subjected to the elasticity test, as well as the toughness test, fracture test and tensile test in the National Textile Industry Standard FZ/T97018-1999. After testing, the elasticity test of the needle for the warp knitting machine obtained in the range of 0.3 parts to 1.2 parts of yttrium element is more than 12,000 times, which meet the quality requirements of the needle for the warp knitting machine.

Example 43: The similarities between this example and Example 1 will not be repeated here, and the difference is the proportions of raw materials: 62.8 parts of zirconium powder, 13 parts of copper powder, 10 parts of nickel powder, 8 parts of titanium powder, 3 parts of aluminum powder, 3 parts of beryllium powder, and 0.2 parts of yttrium powder. The obtained needle for the warp knitting machine is comprehensively subjected to the elasticity test, as well as the toughness test, fracture test and tensile test in the National Textile Industry Standard FZ/T97018-1999. The number of elasticity tests of the needle product for the warp knitting machine is 12253 times. The fracture angle test data of the needle hook is 31°, and the qualified standard is 35°<a<75°. The fracture angle test data of the needle core is 25°, and the qualified standard is a>30°. The fracture strength test data is 22 N/m², and the qualified standard is ≥24 N/m². The tensile strength test data is 19.3 N, and the qualified standard is ≥19.6 N. After testing, the results of the fracture strength test and the tensile strength test of the needle for the warp knitting machine are unqualified. It is concluded that the needle for the warp knitting machine is adversely affected when the proportion of yttrium powder is ≤0.2 parts.

Example 44: The similarities between this example and Example 1 will not be repeated here, and the difference is the proportions of raw materials: 61.5 parts of zirconium powder, 13 parts of copper powder, 10 parts of nickel powder, 8 parts of titanium powder, 3 parts of aluminum powder, 3 parts of beryllium powder, and 1.5 parts of yttrium powder. The number of elasticity tests of the needle product for the warp knitting machine is 18699 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 48°, and the qualified standard is 35°<a<75°. The fracture angle test data of the needle core is 37°, and the qualified standard is a>30°. The fracture strength test data is 27 N/m², and the qualified standard is ≥24 N/m². The tensile strength test data is 27.5 N, and the qualified standard is ≥19.6 N. After testing, the data of the elasticity tests, the fracture angle test of the needle hook, the fracture angle test of the needle core, the fracture strength test and the tensile strength test of the needle for the warp knitting machine are approximate to those of Example 1.

Example 45: The similarities between this example and Example 1 will not be repeated here, and the difference is the proportions of raw materials: 64.8 parts of zirconium powder, 10 parts of copper powder, 10 parts of nickel powder, 8 parts of titanium powder, 3 parts of aluminum powder, 3 parts of beryllium powder, and 1.2 parts of yttrium powder. The number of elasticity tests of the needle product for the warp knitting machine is 10988 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 36°, and the qualified standard is 35°<a<75°. The fracture angle test data of the needle core is 31°, and the qualified standard is a>30°. The fracture strength test data is 23 N/m², and the qualified standard is ≥24 N/m². The tensile strength test data is 21.6 N, and the qualified standard is ≥19.6 N. After testing, the elasticity test result of the needle for the warp knitting machine is unqualified, and the fracture strength test result is unqualified.

Example 46: The similarities between this example and Example 1 will not be repeated here, and the difference is the proportions of raw materials: 57.8 parts of zirconium powder, 17 parts of copper powder, 10 parts of nickel powder, 8 parts of titanium powder, 3 parts of aluminum powder, 3 parts of beryllium powder, and 1.2 parts of yttrium powder. The number of elasticity tests of the needle product for the warp knitting machine is 11275 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 39°, and the qualified standard is 35°<a<75°. The fracture angle test data of the needle core is 36°, and the qualified standard is a>30°. The fracture strength test data is 24 N/m², and the qualified standard is ≥24 N/m². The tensile strength test data is 20.2 N, and the qualified standard is ≥19.6 N. After testing, the elasticity test result of the needle for the warp knitting machine is unqualified.

**In** Example 45 to Example 46, zirconium element is freely allocated, and the performance data are verified when copper powder has a maximum value or a minimum value while yttrium powder is 1.2 parts from the optimal proportion of the experiment. The obtained needle for the warp knitting machine is comprehensively subjected to the elasticity test, as well as the toughness test, fracture test and tensile test in the National Textile Industry Standard FZ/T97018-1999. After testing, the needles for the warp knitting machine obtained in 10 parts and 17 parts of copper powder have unqualified test data and are adversely affected. This defines the optimal range of copper powder as 11-16 parts.

Example 47: The similarities between this example and Example 1 will not be repeated here, and the difference is the proportions of raw materials: 64.8 parts of zirconium powder, 13 parts of copper powder, 7 parts of nickel powder, 8 parts of titanium powder, 3 parts of aluminum powder, 3 parts of beryllium powder, and 1.2 parts of yttrium powder. The number of elasticity tests of the needle product for the warp knitting machine is 13154 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 37°, and the qualified standard is 35°<a<75°. The fracture angle test data of the needle core is 32°, and the qualified standard is a>30°. The fracture strength test data is 25 N/m², and the qualified standard is ≥24 N/m². The tensile strength test data is 22.4 N, and the qualified standard is ≥19.6 N. After testing, the performance test results of the needle for the warp knitting machine are qualified.

Example 48: The similarities between this example and Example 1 will not be repeated here, and the difference is the proportions of raw materials: 65.8 parts of zirconium powder, 13 parts of copper powder, 6 parts of nickel powder, 8 parts of titanium powder, 3 parts of aluminum powder, 3 parts of beryllium powder, and 1.2 parts of yttrium powder. The number of elasticity tests of the needle product for the warp knitting machine is 11825 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 35°, and the qualified standard is 35°<a<75°. The fracture angle test data of the needle core is 31°, and the qualified standard is a>30°. The fracture strength test data is 23 N/m², and the qualified standard is ≥24 N/m². The tensile strength test data is 20.7 N, and the qualified standard is ≥19.6 N. After testing, the fracture strength test result and the elasticity test result of the needle for the warp knitting machine are unqualified.

Example 49: The similarities between this example and Example 1 will not be repeated here, and the difference is the proportions of raw materials: 57.8 parts of zirconium powder, 14 parts of copper powder, 14 parts of nickel powder, 8 parts of titanium powder, 3 parts of aluminum powder, 3 parts of beryllium powder, and 1.2 parts of yttrium powder. The number of elasticity tests of the needle product for the warp knitting machine is 12481 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 34°, and the qualified standard is 35°<a<75°. The fracture angle test data of the needle core is 31°, and the qualified standard is a>30°. The fracture strength test data is 25 N/m², and the qualified standard is ≥24 N/m². The tensile strength test data is 23.9 N, and the qualified standard is ≥19.6 N. After testing, the fracture angle test result of the needle hook of the needle for the warp knitting machines is unqualified.

In Example 47 to Example 49, zirconium element is freely allocated, and the performance data are verified when nickel powder has a maximum value or a minimum value while yttrium powder is 1.2 parts from the optimal proportion of the experiment. The obtained needle for the warp knitting machine is comprehensively subjected to the elasticity test, as well as the toughness test, fracture test and tensile test in the National Textile Industry Standard FZ/T97018-1999. After testing, the needle for the warp knitting machine obtained in 7 parts of nickel powder has qualified test data, the needle for the warp knitting machine obtained in 6 parts of nickel powder has unqualified test data, and the needle for the warp knitting machine obtained in 14 parts of nickel powder has unqualified test data and are adversely affected. This defines the optimal range of nickel powder as 7-13 parts.

Example 50: The similarities between this example and Example 1 will not be repeated here, and the difference is the proportions of raw materials: 65.8 parts of zirconium powder, 13 parts of copper powder, 10 parts of nickel powder, 4 parts of titanium powder, 3 parts of aluminum powder, 3 parts of beryllium powder, and 1.2 parts of yttrium powder. The number of elasticity tests of the needle product for the warp knitting machine is 13372 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 37°, and the qualified standard is 35°<a<75°. The fracture angle test data of the needle core is 33°, and the qualified standard is a>30°. The fracture strength test data is 21 N/m², and the qualified standard is ≥24 N/m². The tensile strength test data is 22.1 N, and the qualified standard is ≥19.6 N. After testing, the fracture strength test result of the needle for the warp knitting machine is unqualified.

Example 51: The similarities between this example and Example 1 will not be repeated here, and the difference is the proportions of raw materials: 58.8 parts of zirconium powder, 13 parts of copper powder, 10 parts of nickel powder, 11 parts of titanium powder, 3 parts of aluminum powder, 3 parts of beryllium powder, and 1.2 parts of yttrium powder. The number of elasticity tests of the needle product for the warp knitting machine is 12127 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 36°, and the qualified standard is 35°<a<75°. The fracture angle test data of the needle core is 30°, and the qualified standard is a>30°. The fracture strength test data is 26 N/m², and the qualified standard is ≥24 N/m². The tensile strength test data is 22.2 N, and the qualified standard is ≥19.6 N. After testing, the fracture angle test result of the needle core of the needle for the warp knitting machine is unqualified.

In Example 50 to Example 51, zirconium element is freely allocated, and the performance data are verified when titanium powder has a maximum value or a minimum value while yttrium powder is 1.2 parts from the optimal proportion of the experiment. The obtained needle for the warp knitting machine is comprehensively subjected to the elasticity test, as well as the toughness test, fracture test and tensile test in the National Textile Industry Standard FZ/T97018-1999. After testing, the needles for the warp knitting machine obtained in 4 parts and 11 parts of titanium powder have unqualified test data and are adversely affected.

Example 52: The similarities between this example and Example 1 will not be repeated here, and the difference is the proportions of raw materials: 64.3 parts of zirconium powder, 13 parts of copper powder, 10 parts of nickel powder, 8 parts of titanium powder, 0.5 parts of aluminum powder, 3 parts of beryllium powder, and 1.2 parts of yttrium powder. The number of elasticity tests of the needle product for the warp knitting machine is 9574 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 35°, and the qualified standard is 35°<a<75°. The fracture angle test data of the needle core is 31°, and the qualified standard is a>30°. The fracture strength test data is 25 N/m², and the qualified standard is ≥24 N/m². The tensile strength test data is 16.5 N, and the qualified standard is ≥19.6 N. After testing, the elasticity test result, the fracture angle test result of the needle hook, and the tensile strength test result of the needle for the warp knitting machine are all unqualified.

Example 53: The similarities between this example and Example 1 will not be repeated here, and the difference is the proportions of raw materials: 58.8 parts of zirconium powder, 13 parts of copper powder, 10 parts of nickel powder, 8 parts of titanium powder, 6 parts of aluminum powder, 3 parts of beryllium powder, and 1.2 parts of yttrium powder. The number of elasticity tests of the needle product for the warp knitting machine is 13615 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 36°, and the qualified standard is 35°<a<75°. The fracture angle test data of the needle core is 33°, and the qualified standard is a>30°. The fracture strength test data is 24 N/m², and the qualified standard is ≥24 N/m². The tensile strength test data is 20.9 N, and the qualified standard is ≥19.6 N. After testing, the performance test results of the needle for the warp knitting machine are all qualified.

Example 54: The similarities between this example and Example 1 will not be repeated here, and the difference is the proportions of raw materials: 57.8 parts of zirconium powder, 13 parts of copper powder, 10 parts of nickel powder, 8 parts of titanium powder, 7 parts of aluminum powder, 3 parts of beryllium powder, and 1.2 parts of yttrium powder. The number of elasticity tests of the needle product for the warp knitting machine is 13100 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 36°, and the qualified standard is 35°<a<75°. The fracture angle test data of the needle core is 31°, and the qualified standard is a>30°. The fracture strength test data is 25 N/m², and the qualified standard is ≥24 N/m². The tensile strength test data is 19.7 N, and the qualified standard is ≥19.6 N. After testing, the performance test results of the needle for the warp knitting machine are all qualified.

Example 55: The similarities between this example and Example 1 will not be repeated here, and the difference is the proportions of raw materials: 56.8 parts of zirconium powder, 13 parts of copper powder, 10 parts of nickel powder, 8 parts of titanium powder, 8 parts of aluminum powder, 3 parts of beryllium powder, and 1.2 parts of yttrium powder. The number of elasticity tests of the needle product for the warp knitting machine is 11581 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 34°, and the qualified standard is 35°<a<75°. The fracture angle test data of the needle core is 29°, and the qualified standard is a>30°. The fracture strength test data is 24 N/m², and the qualified standard is ≥24 N/m². The tensile strength test data is 19 N, and the qualified standard is ≥19.6 N. After testing, the elasticity test result, the fracture angle test result of the needle hook, the fracture angle test result of the needle core, and the tensile strength test result of the needle for the warp knitting machine are all unqualified.

In Example 52 to Example 55, zirconium element is freely allocated, and the performance data are verified when aluminum powder has a maximum value or a minimum value while yttrium powder is 1.2 parts from the optimal proportion of the experiment. The obtained needle for the warp knitting machine is comprehensively subjected to the elasticity test, as well as the toughness test, fracture test and tensile test in the National Textile Industry Standard FZ/T97018-1999. After testing, the needle for the warp knitting machine obtained in 0.5 parts of aluminum powder has unqualified test data, the needle for the warp knitting machine obtained in 6 parts of aluminum powder has qualified test data, the needle for the warp knitting machine obtained in 7 parts of aluminum powder has qualified test data, and the needle for the warp knitting machine obtained in 8 parts of aluminum powder has unqualified test data and are adversely affected. This defines the optimal range of aluminum powder as 1-7 parts.

Example 56: The similarities between this example and Example 1 will not be repeated here, and the difference is the proportions of raw materials: 64.3 parts of zirconium powder, 13 parts of copper powder, 10 parts of nickel powder, 8 parts of titanium powder, 3 parts of aluminum powder, 0.5 parts of beryllium powder, and 1.2 parts of yttrium powder. The number of elasticity tests of the needle product for the warp knitting machine is 9248 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 25°, and the qualified standard is 35°<a<75°. The fracture angle test data of the needle core is 22°, and the qualified standard is a>30°. The fracture strength test data is 16 N/m², and the qualified standard is ≥24 N/m². The tensile strength test data is 18.7 N, and the qualified standard is ≥19.6 N. After testing, the elasticity test result, the fracture angle test result of the needle hook, the fracture angle test result of the needle core, the fracture strength test result and the tensile strength test result of the needle for the warp knitting machine are all unqualified.

Example 57: The similarities between this example and Example 1 will not be repeated here, and the difference is the proportions of raw materials: 59.8 parts of zirconium powder, 13 parts of copper powder, 10 parts of nickel powder, 8 parts of titanium powder, 3 parts of aluminum powder, 5 parts of beryllium powder, and 1.2 parts of yttrium powder. The number of elasticity tests of the needle product for the warp knitting machine is 15012 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 45°, and the qualified standard is 35°<a<75°. The fracture angle test data of the needle core is 39°, and the qualified standard is a>30°. The fracture strength test data is 30 N/m², and the qualified standard is ≥24 N/m². The tensile strength test data is 27.9 N, and the qualified standard is ≥19.6 N. After testing, the performance test results of the needle for the warp knitting machine are qualified.

Example 58: The similarities between this example and Example 1 will not be repeated here, and the difference is the proportions of raw materials: 58.8 parts of zirconium powder, 13 parts of copper powder, 10 parts of nickel powder, 8 parts of titanium powder, 3 parts of aluminum powder, 6 parts of beryllium powder, and 1.2 parts of yttrium powder. The number of elasticity tests of the needle product for the warp knitting machine is 14065 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 42°, and the qualified standard is 35°<a<75°. The fracture angle test data of the needle core is 36°, and the qualified standard is a>30°. The fracture strength test data is 26 N/m², and the qualified standard is ≥24 N/m². The tensile strength test data is 25.5 N, and the qualified standard is ≥19.6 N. After testing, the performance test results of the needle for the warp knitting machine are qualified.

Example 59: The similarities between this example and Example 1 will not be repeated here, and the difference is the proportions of raw materials: 57.8 parts of zirconium powder, 13 parts of copper powder, 10 parts of nickel powder, 8 parts of titanium powder, 3 parts of aluminum powder, 7 parts of beryllium powder, and 1.2 parts of yttrium powder. The number of elasticity tests of the needle product for the warp knitting machine is 12047 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 39°, and the qualified standard is 35°<a<75°. The fracture angle test data of the needle core is 35°, and the qualified standard is a>30°. The fracture strength test data is 24 N/m², and the qualified standard is ≥24 N/m². The tensile strength test data is 21.7 N, and the qualified standard is ≥19.6 N. After testing, the performance test results of the needle for the warp knitting machine are qualified.

Example 60: The similarities between this example and Example 1 will not be repeated here, and the difference is the proportions of raw materials: 56.8 parts of zirconium powder, 13 parts of copper powder, 10 parts of nickel powder, 8 parts of titanium powder, 3 parts of aluminum powder, 8 parts of beryllium powder, and 1.2 parts of yttrium powder. The number of elasticity tests of the needle product for the warp knitting machine is 11892 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 37°, and the qualified standard is 35°<a<75°. The fracture angle test data of the needle core is 30°, and the qualified standard is a>30°. The fracture strength test data is 23 N/m², and the qualified standard is ≥24 N/m². The tensile strength test data is 20.3 N, and the qualified standard is ≥19.6 N. After testing, the elasticity test result, the fracture angle test result of the needle core and the fracture strength test result of the needle for the warp knitting machine are all unqualified.

In Example 56 to Example 60, zirconium element is freely allocated, and the performance data are verified when beryllium powder has a maximum value or a minimum value while yttrium powder is 1.2 parts from the optimal proportion of the experiment. The obtained needle for the warp knitting machine is comprehensively subjected to the elasticity test, as well as the toughness test, fracture test and tensile test in the National Textile Industry Standard FZ/T97018-1999. After testing, the needle for the warp knitting machine obtained in 0.5 parts of beryllium powder has unqualified test data, the needle for the warp knitting machine obtained in 5 parts of beryllium powder has qualified test data, the needle for the warp knitting machine obtained in 7 parts of beryllium powder has qualified test data, and the needle for the warp knitting machine obtained in 8 parts of beryllium powder has unqualified test data and are adversely affected. This defines the optimal range of aluminum powder as 1-7 parts.

Example 61: The similarities between this example and Example 1 will not be repeated here, and the difference is the proportions of raw materials: 61.2 parts of zirconium powder, 13 parts of copper powder, 10 parts of nickel powder, 8 parts of titanium powder, 3 parts of aluminum powder, 3 parts of beryllium powder, and 1.8 parts of yttrium powder. The number of elasticity tests of the needle product for the warp knitting machine is 16178 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 43°, and the qualified standard is 35°<a<75°. The fracture angle test data of the needle core is 36°, and the qualified standard is a>30°. The fracture strength test data is 25 N/m², and the qualified standard is ≥24 N/m². The tensile strength test data is 22.9 N, and the qualified standard is ≥19.6 N. After testing, the performance test results of the needle for the warp knitting machine are qualified.

Example 62: The similarities between this example and Example 1 will not be repeated here, and the difference is the proportions of raw materials: 61 parts of zirconium powder, 13 parts of copper powder, 10 parts of nickel powder, 8 parts of titanium powder, 3 parts of aluminum powder, 3 parts of beryllium powder, and 2 parts of yttrium powder. The number of elasticity tests of the needle product for the warp knitting machine is 14088 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 40°, and the qualified standard is 35°<a<75°. The fracture angle test data of the needle core is 31°, and the qualified standard is a>30°. The fracture strength test data is 24 N/m², and the qualified standard is ≥24 N/m². The tensile strength test data is 22.7 N, and the qualified standard is ≥19.6 N. After testing, the performance test results of the needle for the warp knitting machine are qualified.

Example 63: The similarities between this example and Example 1 will not be repeated here, and the difference is the proportions of raw materials: 60.8 parts of zirconium powder, 13 parts of copper powder, 10 parts of nickel powder, 8 parts of titanium powder, 3 parts of aluminum powder, 3 parts of beryllium powder, and 2.2 parts of yttrium powder. The number of elasticity tests of the needle product for the warp knitting machine is 11267 times. The obtained needle for the warp knitting machine is comprehensively subjected to the elasticity test, as well as the toughness test, fracture test and tensile test in the National Textile Industry Standard FZ/T97018-1999. The fracture angle test data of the needle hook is 37°, and the qualified standard is 35°<a<75°. The fracture angle test data of the needle core is 30°, and the qualified standard is a>30°. The fracture strength test data is 21 N/m², and the qualified standard is ≥24 N/m². The tensile strength test data is 18.9 N, and the qualified standard is ≥19.6 N. After testing, the elasticity test result, the fracture angle test result of the needle core, the fracture strength test result and the tensile strength test result of the needle for the warp knitting machine are all unqualified.

In Example 61 to Example 63, zirconium element is freely allocated, and the proportion of yttrium powder is increased gradually to determine the suitable range of the yttrium powder. The obtained needle for the warp knitting machine is comprehensively subjected to the elasticity test, as well as the toughness test, fracture test and tensile test in the National Textile Industry Standard FZ/T97018-1999. After testing, the needle for the warp knitting machine obtained in 1.8 parts of yttrium powder has qualified test data, the needle for the warp knitting machine obtained in 5 parts of beryllium powder has qualified test data, the needle for the warp knitting machine obtained in 2 parts of yttrium powder has qualified test data, and the needle for the warp knitting machine obtained in 2.2 parts of yttrium powder has unqualified test data and are adversely affected. This defines the optimal range of yttrium powder as 0.3-2 parts.

According to the qualified examples, it is concluded that the suitable range of zirconium powder is: 57.5 parts to 65.5 parts.

The needle products for the warp knitting machine were purchased in the market, and they were tested for about 8000-12000 times by an elasticity testing tool. The maximum number of the elasticity tests of the product obtained through a method for manufacture a needle by an amorphous alloy injection molding process is up to 18756 times, which is 1.5 times that of the existing products. In addition, the needle for warp knitting manufactured by the amorphous alloy injection molding process is non-magnetic, which can better meet the working conditions of the product. After 1500 hours of salt spray test, the surface of the needle for warp knitting had no corrosion, showing an excellent corrosion resistance.

In summary, according to the present application, the needle for warp knitting manufactured by the amorphous alloy process is scientific and reasonable in proportion of each raw material. The components are coordinated with each other to synergize, so that the product has excellent fatigue resistance, toughness and strength, and the service life of the product is more than 1.5 times that of the existing retaining elements. The preparation process is simplified, the utilization rate of raw materials is high, and the specification and size consistency is high. The manpower and labor intensity are greatly reduced in production, which is easy for automation. The comprehensive cost is saved by 60% compared with the existing technology, making it suitable for large-scale production. It provides a good facility foundation for the progress in the field of complex and advanced pattern textile.

## Claims

1. A needle for a warp knitting machine, wherein it is manufactured by an amorphous alloy injection molding process and comprises, in parts by weight, 57.5-65.5 parts of zirconium, 11-16 parts of copper, 7-13 parts of nickel, 5-10 parts of titanium, 1-7 parts of aluminum, 1-7 parts of beryllium, and 0.3-2 parts of yttrium.

2. The needle for the warp knitting machine according to claim 1, wherein it comprises 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder.

3. A method for manufacturing a needle for a warp knitting machine by an amorphous alloy injection molding process, comprising the steps of: (1) mixing and smelting raw materials into small pieces; (2) injection molding; (3) sprue removal; (4) thickness processing; (5) slotting; (6) polishing; and (7) electroplating.

4. The method for manufacturing the needle for the warp knitting machine by the amorphous alloy injection molding process according to claim 3, wherein step (1) of mixing and smelting raw materials into small pieces comprises:
weighing, in parts by mass, 61.8 parts of zirconium powder, 13 parts of copper powder, 10 parts of nickel powder, 8 parts of titanium powder, 3 parts of aluminum powder, 3 parts of beryllium powder, and 1.2 parts of yttrium powder;
adding the materials into a smelting furnace and heating to 1000-1200°C;
vacuumizing with argon gas protection to isolate oxygen in order to prevent oxidation of the raw materials in the smelting furnace;
injecting the melted raw materials as a liquid state into a die cavity special for making feed, with the die provided with cooling circulation water for the rapid cooling of the feed as a melted liquid state into a solid block; and
taking out and cracking the solid block into small pieces of raw materials of less than 20 mm.

5. The method for manufacturing the needle for the warp knitting machine by the amorphous alloy injection molding process according to claim 3, wherein step (2) of injection molding comprises:
adding the small pieces of raw materials of less than 20 mm into a storage bin of an injection device;
vacuumizing until below 500 Pa;
heating the raw materials to above 700°C by high-frequency heating in this vacuum or argon protection state;
automatically pouring the completely melted raw materials into an injection chamber; and
injecting the melt into a die at a high speed greater than 0.5 m/s and a high pressure to obtain a needle injection blank for the warp knitting machine connected to a material rod; wherein the die temperature is preferably 180-220°C.

6. The method for manufacturing the needle for the warp knitting machine by the amorphous alloy injection molding process according to claim 3, wherein step (3) of sprue removal comprises:
placing the needle injection blank for the warp knitting machine connected to the material rod into a positioning tool for laser cutting, wherein the positioning tool is mounted on a workbench of a laser cutting machine;
pressing a start button to automatically start a set program, allowing the laser cutting machine to emit laser light to cut the material rod on the needle for the warp knitting machine, leaving a margin of 0.05mm from the cutting position to the needle for the next processing, to obtain a needle blank for the warp knitting machine;
fixing the needle blank for the warp knitting machine neatly in batches on a positioning tool special for a grinder; and
grinding the fixed needle blank for the warp knitting machine to remove the excess of the sprue, with a Z-axis feed amount of preferably 0.01 mm each time, until the sprue is level with the edge of the product.

7. The method for manufacturing the needle for the warp knitting machine by the amorphous alloy injection molding process according to claim 3, wherein step (4) of thickness processing comprises:
placing the sprue-removed needle blank for the warp knitting machine on the grinder; and
grinding two large surfaces of the needle blank for the warp knitting machine to a certain thickness.

8. The method for manufacturing the needle for the warp knitting machine by the amorphous alloy injection molding process according to claim 3, wherein step (5) of slotting comprises:
placing a positioning tool for slotting on a platform of a scribing machine;
placing the thickness-processed needle blank for the warp knitting machine in the positioning tool for slotting;
starting the scribing machine, allowing a blade on the scribing machine to rotate rapidly and the head part loaded with the blade to move according to a predetermined trajectory; and
whitting the needle blank with the blade according to the movement trajectory to obtain a slotted needle blank.

9. The method for manufacturing the needle for the warp knitting machine by the amorphous alloy injection molding process according to claim 3, wherein step (6) of polishing comprises:
placing the slotted needle blank into a polishing jig;
holding the polishing jig close to a polishing wheel; and
polishing the slotted needle blank to obtain a polished needle blank.

10. The method for manufacturing the needle for the warp knitting machine by the amorphous alloy injection molding process according to claim 3, wherein step (7) of electroplating comprises:
cleaning the polished needle blank;
placing the well cleaned needle blank on an electroplating jig;
heating in a furnace for surface treatment; and
taking the product out of the furnace after a certain period of time;
wherein a layer of coating is formed on the surface of the product, with a greatly improved wear resistance of the product.
